(19) **Europäisches Patentamt / European Patent Office / Office européen des brevets**

(11) **EP 4 583 605 A1**

(12) **EUROPEAN PATENT APPLICATION**
published in accordance with Art. 153(4) EPC

(43) Date of publication:
**09.07.2025 Bulletin 2025/28**

(21) Application number: **23867428.7**

(22) Date of filing: **15.09.2023**

(51) International Patent Classification (IPC):
**H04W 72/04** (2023.01)     **H04W 24/02** (2009.01)

(52) Cooperative Patent Classification (CPC):
**H04W 24/02; H04W 24/08; H04W 72/04**

(86) International application number:
**PCT/CN2023/119253**

(87) International publication number:
**WO 2024/061139 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 CN 202211166569**
**29.10.2022 CN 202211340812**

(71) Applicant: **Huawei Technologies Co., Ltd.**
**Shenzhen, Guangdong 518129 (CN)**

(72) Inventors:
- **XUE, Yifan**
  **Shenzhen, Guangdong 518129 (CN)**
- **KUANG, Yiru**
  **Shenzhen, Guangdong 518129 (CN)**
- **XUE, Lixia**
  **Shenzhen, Guangdong 518129 (CN)**
- **LI, Qiang**
  **Shenzhen, Guangdong 518129 (CN)**

(74) Representative: **Maiwald GmbH**
**Engineering**
**Elisenhof**
**Elisenstrasse 3**
**80335 München (DE)**

(54) **DATA TRANSMISSION METHOD AND APPARATUS, AND STORAGE MEDIUM**

(57) A data transmission method, an apparatus, and a storage medium are provided. The method includes: A first terminal device and a first network device determine N second GAP occasions based on M first gap (GAP) occasions, where the M first GAP occasions include the N second GAP occasions, the M first GAP occasions are periodic time domain positions that are of a first GAP and that are configured by a first network device, M is greater than N, and both M and N are positive integers. A first signal is not transmitted between the first terminal device and a second network device on the N second GAP occasions, to prevent all the configured M first GAP occasions from taking effect on the first terminal device, which results in the first GAP occupying a large quantity of resources, and therefore to reduce resource occupation of the GAP.

FIG. 4

# Description

This application claims priorities to Chinese Patent Application No. 202211166569.6, filed with the China National Intellectual Property Administration on September 21, 2022, and entitled "LP-WUS MEASUREMENT METHOD", and to Chinese Patent Application No. 202211340812.1, filed with the China National Intellectual Property Administration on October 29, 2022, and entitled "DATA TRANSMISSION METHOD, APPARATUS, AND STORAGE MEDIUM", both of which are incorporated herein by reference in their entireties.

## TECHNICAL FIELD

This application relates to the field of communication technologies, and in particular, to a data transmission method, an apparatus, and a storage medium.

## BACKGROUND

In some communication systems, such as a $5^{th}$ generation (5th-Generation, 5G) communication system, a network device may configure a measurement gap (GAP) for a terminal device, and the terminal device measures a reference signal of a neighbor cell in the measurement GAP without transmitting data with a serving cell.

However, measurement GAPs configured by the network device are usually dense, causing high resource occupation of the measurement GAPs. Therefore, how to reduce the resource occupation of the measurement GAPs is an urgent problem to be resolved currently.

## SUMMARY

Embodiments of this application provide a data transmission method, an apparatus, and a storage medium, to reduce resource occupation of a measurement GAP.

According to a first aspect, an embodiment of this application provides a data transmission method, including: A first terminal device determines N second GAP occasions based on M first GAP occasions, where the M first GAP occasions include the N second GAP occasions, the M first GAP occasions are periodic time domain positions that are of a first GAP and that are configured by a first network device, M is greater than N, and both M and N are positive integers; and the first terminal device stops, on the N second GAP occasions, receiving a first signal sent by the first network device.

According to the data transmission method provided in the first aspect, some GAP occasions are determined from a plurality of GAP occasions configured by the first network device, to prevent all the configured GAP occasions of a GAP from taking effect on the first terminal device, which results in the GAP occupying a large quantity of resources, and therefore to reduce resource occupation of the GAP.

In a possible implementation, the method further includes: The first terminal device receives configuration information sent by the first network device, where the configuration information is used to configure the periodic time domain positions of the first GAP.

According to the data transmission method provided in this implementation, the periodic time domain positions of the first GAP are configured for the first terminal device, to determine the N second GAP occasions from the periodic time domain positions of the first GAP.

In a possible implementation, the configuration information includes at least one of a periodicity, an offset value, and a time domain length of the first GAP.

According to the data transmission method provided in this implementation, the first GAP is flexibly configured.

In a possible implementation, the N second GAP occasions are determined from the M first GAP occasions based on an identifier of the first terminal device or an identifier of a terminal device group to which the first terminal device belongs.

According to the data transmission method provided in this implementation, the N second GAP occasions are determined from the M first GAP occasions based on a mapping relationship between the identifier of the first terminal device or the group identifier of the first terminal device and the second GAP occasion, so that efficiency of determining the GAP occasion is improved.

In a possible implementation, the M first GAP occasions are divided into W groups of GAP occasions, an $i^{th}$ first GAP occasion in the M first GAP occasions is the second GAP occasion, both i and W are positive integers, and i satisfies the following formula: D mod W = i mod W, where mod represents a modulo operation, and D is the identifier of the first terminal device or the identifier of the terminal device group to which the first terminal device belongs.

The data transmission method provided in this implementation helps the N second GAP occasions that can be used by the first terminal device to be selected from the M first GAP occasions, to prevent the GAP from occupying a large quantity of communication resources of the first terminal device.

In a possible implementation, W is determined based on a periodicity T of the first GAP and a measurement periodicity L, and the measurement periodicity is a periodicity in which the first terminal device measures a reference signal of a neighbor cell.

According to the data transmission method provided in this implementation, the N second GAP occasions are determined from the M first GAP occasions with reference to the measurement periodicity of the first terminal device, so that the N second GAP occasions better meet a measurement requirement of the first terminal device.

In a possible implementation, W is less than or equal to a quotient of the periodicity T of the first GAP and the measurement periodicity L.

According to the data transmission method provided in this implementation, a smaller value of W than the quotient of the periodicity T of the first GAP and the measurement periodicity L indicates denser second GAP occasions, so that the second GAP occasions can better cover a measurement time of the reference signal, and accuracy of RRM measurement of the first terminal device is higher.

In a possible implementation, the configuration information is carried in a broadcast message sent by the first network device.

The data transmission method provided in this implementation helps a terminal device in an idle state or an inactive state to receive the configuration information.

In a possible implementation, the first terminal device is in an idle state or an inactive state when receiving the broadcast message.

According to the data transmission method provided in this implementation, the broadcast message is sent to the first terminal device in the idle state or the inactive state, so that a problem in which the terminal device currently in the idle state or the inactive state cannot determine a measurement GAP can be resolved.

In a possible implementation, the first signal includes at least one of the following: a low-power wake-up signal; a low-power measurement signal; and a low-power synchronization signal.

The data transmission method provided in this implementation is applicable to a response to the measurement requirement when a low-power wake-up circuit operates. The first terminal device may stop, on the N second GAP occasions, receiving the first signal through the low-power wake-up circuit, and the first network device does not send the first signal, so that signaling overheads of a communication system can be reduced.

In a possible implementation, that the first terminal device stops receiving a first signal sent by the first network device includes: The first terminal device stops receiving the first signal in a first frequency range.

According to the data transmission method provided in this implementation, the first signal may be any signal in the first frequency range, to resolve a case in which the first terminal device cannot receive a signal sent on a frequency of a serving cell when performing inter-frequency measurement or inter-system measurement on the N second GAP occasions.

In a possible implementation, the method further includes: The first terminal device receives, on the N second GAP occasions, a second signal in a second frequency range, where the second frequency range is different from the first frequency range, and the second signal is used for radio resource management RRM measurement.

According to the data transmission method provided in this implementation, the first terminal device can implement RRM measurement on the N second GAP occasions, thereby reducing impact on a communication service of the serving cell.

In a possible implementation, that the first terminal device receives a second signal in a second frequency range includes: The first terminal device receives the second signal in the second frequency range by using a first communication apparatus, where the second signal is a measurement reference signal of a neighbor cell; or the first terminal device receives the second signal in the second frequency range by using a second communication apparatus, where the second signal is a measurement reference signal of a serving cell or a neighbor cell.

According to the data transmission method provided in this implementation, the first terminal device receives, in the second frequency range, the second signal used for RRM measurement, to implement neighbor cell measurement without affecting communication reliability of the serving cell.

In a possible implementation, the time domain length of the first GAP is greater than or equal to duration for measuring the reference signal of the neighbor cell; or the time domain length of the first GAP is greater than or equal to a sum of duration for measuring the reference signal of the neighbor cell and at least one of the following: duration for measurement frequency switching; duration for switching from the first communication apparatus to the second communication apparatus, where the first communication apparatus is configured to receive the first signal in the first frequency range; and duration for starting the second communication apparatus, where the second communication apparatus is configured to receive the second signal in the second frequency range, and the first frequency range is different from the second frequency range.

According to the data transmission method provided in this implementation, duration of the first GAP can cover at least one of the duration for measurement frequency switching, the duration for communication apparatus switching, and the duration for starting the second communication apparatus, so that, in different measurement scenarios, the first terminal device can completely receive, on each second GAP occasion, a reference signal sent in one reference signal periodicity of the neighbor cell.

According to a second aspect, an embodiment of this application provides a data transmission method, including: A first network device determines N second GAP occasions based on M first GAP occasions, where the M first GAP occasions include the N second GAP occasions, the M first GAP occasions are periodic time domain positions that are of a first GAP and that are configured by the first network device, M is greater than N, and both M and N are positive integers; and the first network device stops, on the N second GAP occasions, sending a first signal to a first terminal device.

In a possible implementation, the method further includes: The first network device sends configuration information to the first terminal device, where the configuration information is used to configure the periodic time domain positions of the first GAP.

In a possible implementation, the configuration information includes at least one of a periodicity, an offset value, and a time domain length of the first GAP.

In a possible implementation, the N second GAP occasions are determined from the M first GAP occasions based on an identifier of the first terminal device or an identifier of a terminal device group to which the first terminal device belongs.

In a possible implementation, the M first GAP occasions are divided into W groups of GAP occasions, an $i^{th}$ first GAP occasion in the M first GAP occasions is the second GAP occasion, both i and W are positive integers, and i satisfies the following formula: D mod W = i mod W, where mod represents a modulo operation, and D is the identifier of the first terminal device or the identifier of the terminal device group to which the first terminal device belongs.

In a possible implementation, W is determined based on a periodicity T of the first GAP and a measurement periodicity L, and the measurement periodicity is a periodicity in which the first terminal device measures a reference signal of a neighbor cell.

In a possible implementation, W is less than or equal to a quotient of the periodicity T of the first GAP and the measurement periodicity L.

In a possible implementation, the configuration information is carried in a broadcast message.

In a possible implementation, the first terminal device is in an idle state or an inactive state when receiving the broadcast message.

In a possible implementation, the first signal includes at least one of the following: a low-power wake-up signal; a low-power measurement signal; and a low-power synchronization signal.

In a possible implementation, that the first network device stops sending a first signal to a first terminal device includes: The first network device stops sending the first signal to the first terminal device in a first frequency range.

In a possible implementation, the time domain length of the first GAP is greater than or equal to duration for measuring the reference signal of the neighbor cell; or the time domain length of the first GAP is greater than or equal to a sum of duration for measuring the reference signal of the neighbor cell and at least one of the following: duration for measurement frequency switching; duration for switching from a first communication apparatus to a second communication apparatus, where the first communication apparatus is configured to receive the first signal in the first frequency range; and duration for starting the second communication apparatus, where the second communication apparatus is configured to receive the second signal in the second frequency range, and the first frequency range is different from the second frequency range.

For beneficial effects of the data transmission method provided in the second aspect and the possible implementations of the second aspect, refer to the beneficial effects brought by the first aspect and the possible implementations of the first aspect. Details are not described herein again.

According to a third aspect, an embodiment of this application provides a communication apparatus, including: a processing module, configured to determine N second GAP occasions based on M first gap (GAP) occasions, where the M first GAP occasions include the N second GAP occasions, the M first GAP occasions are periodic time domain positions that are of a first GAP and that are configured by a first network device, M is greater than N, and both M and N are positive integers; and a transceiver module, configured to stop, on the N second GAP occasions, receiving a first signal sent by the first network device.

In a possible implementation, the transceiver module is further configured to receive configuration information sent by the first network device, where the configuration information is used to configure the periodic time domain positions of the first GAP.

In a possible implementation, the configuration information includes at least one of a periodicity, an offset value, and a time domain length of the first GAP.

In a possible implementation, the N second GAP occasions are determined from the M first GAP occasions based on an identifier of the communication apparatus or an identifier of a terminal device group to which the communication apparatus belongs.

In a possible implementation, the M first GAP occasions are divided into W groups of GAP occasions, an $i^{th}$ first GAP occasion in the M first GAP occasions is the second GAP occasion, both i and W are positive integers, and i satisfies the following formula: D mod W = i mod W, where mod represents a modulo operation, and D is the identifier of the first terminal device or the identifier of the terminal device group to which the first terminal device belongs.

In a possible implementation, W is determined based on a periodicity T of the first GAP and a measurement periodicity L, and the measurement periodicity is a periodicity in which the communication apparatus measures a reference signal of a neighbor cell.

In a possible implementation, W is less than or equal to a quotient of the periodicity T of the first GAP and the measurement periodicity L.

In a possible implementation, the configuration information is carried in a broadcast message sent by the first network device.

In a possible implementation, the communication apparatus is in an idle state or an inactive state when receiving the broadcast message.

In a possible implementation, the first signal includes at least one of the following: a low-power wake-up signal; a low-power measurement signal; and

a low-power synchronization signal.

In a possible implementation, the transceiver module is specifically configured to stop receiving the first signal in a first frequency range.

In a possible implementation, the transceiver module is further configured to receive, on the N second GAP occasions, a second signal in a second frequency range, where the second frequency range is different from the first frequency range, and the second signal is used for radio resource management RRM measurement.

In a possible implementation, the transceiver module is specifically configured to: the first terminal device receives the second signal in the second frequency range by using a first communication apparatus, where the second signal is a measurement reference signal of a neighbor cell; or the first terminal device receives the second signal in the second frequency range by using a second communication apparatus, where the second signal is a measurement reference signal of a serving cell or a neighbor cell.

In a possible implementation, the time domain length of the first GAP is greater than or equal to duration for measuring a reference signal of a neighbor cell; or the time domain length of the first GAP is greater than or equal to a sum of duration for measuring a reference signal of a neighbor cell and at least one of the following: duration for measurement frequency switching; duration for switching from the first communication apparatus to the second communication apparatus, where the first communication apparatus is configured to receive the first signal in the first frequency range; and duration for starting the second communication apparatus, where the second communication apparatus is configured to receive the second signal in the second frequency range, and the first frequency range is different from the second frequency range.

For beneficial effects of the communication apparatus provided in the third aspect and the possible implementations of the third aspect, refer to the beneficial effects brought by the first aspect and the possible implementations of the first aspect. Details are not described herein again.

According to a fourth aspect, an embodiment of this application provides a communication apparatus, including: a processing module, configured to determine N second GAP occasions based on M first GAP occasions, where the M first GAP occasions include the N second GAP occasions, the M first GAP occasions are periodic time domain positions that are of a first GAP and that are configured by the communication apparatus, M is greater than N, and both M and N are positive integers; and a transceiver module, configured to stop, on the N second GAP occasions, sending a first signal to the first terminal device.

In a possible implementation, the transceiver module is further configured to send configuration information to the first terminal device, where the configuration information is used to configure the periodic time domain positions of the first GAP.

In a possible implementation, the configuration information includes at least one of a periodicity, an offset value, and a time domain length of the first GAP.

In a possible implementation, the N second GAP occasions are determined from the M first GAP occasions based on an identifier of the first terminal device or an identifier of a terminal device group to which the first terminal device belongs.

In a possible implementation, the M first GAP occasions are divided into W groups of GAP occasions, an $i^{th}$ first GAP occasion in the M first GAP occasions is the second GAP occasion, both i and W are positive integers, and i satisfies the following formula: D mod W = i mod W, where mod represents a modulo operation, and D is the identifier of the first terminal device or the identifier of the terminal device group to which the first terminal device belongs.

In a possible implementation, W is determined based on a periodicity T of the first GAP and a measurement periodicity L, and the measurement periodicity is a periodicity in which the first terminal device measures a reference signal of a neighbor cell.

In a possible implementation, W is less than or equal to a quotient of the periodicity T of the first GAP and the measurement periodicity L.

In a possible implementation, the configuration information is carried in a broadcast message.

In a possible implementation, the first terminal device is in an idle state or an inactive state when receiving the broadcast message.

In a possible implementation, the first signal includes at least one of the following: a low-power wake-up signal; a low-power measurement signal; and a low-power synchronization signal.

In a possible implementation, the transceiver module is specifically configured to stop sending the first signal to the first terminal device in a first frequency range.

In a possible implementation, the time domain length of the first GAP is greater than or equal to duration for measuring a reference signal of a neighbor cell; or the time domain length of the first GAP is greater than or equal to a sum of duration for measuring a reference signal of a neighbor cell and at least one of the following: duration for measurement frequency switching; duration for switching from a first communication apparatus to a second communication apparatus, where the first communication apparatus is configured to receive the first signal in the first frequency range; and duration for starting the second communication apparatus, where the second communication apparatus is configured to receive the second signal in the second frequency range, and the first frequency range is different from the second frequency range.

For beneficial effects of the communication apparatus provided in the fourth aspect and the possible implementations of the fourth aspect, refer to the beneficial effects brought by the first aspect and the possible implementations of the first aspect. Details are not described herein again.

According to a fifth aspect, an embodiment of this application provides a communication device, including a processor and a memory. The memory is configured to store a computer program, and the processor is configured to invoke and run the computer program stored in the memory, to perform the method according to any one of the first aspect, the second aspect, or the possible implementations of the first aspect or the second aspect.

According to a sixth aspect, an embodiment of this application provides a chip, including a processor, configured to: invoke computer instructions from a memory and run the computer instructions, so that a device in which the chip is installed performs the method according to any one of the first aspect, the second aspect, or the possible implementations of the first aspect or the second aspect.

According to a seventh aspect, an embodiment of this application provides a computer-readable storage medium, configured to store computer program instructions, and the computer program enables a computer to perform the method according to any one of the first aspect, the second aspect, or the possible implementations of the first aspect or the second aspect.

According to an eighth aspect, an embodiment of this application provides a computer program product, including computer program instructions, and the computer program instructions enable a computer to perform the method according to any one of the first aspect, the second aspect, or the possible implementations of the first aspect or the second aspect.

**BRIEF DESCRIPTION OF DRAWINGS**

FIG. 1 is a diagram of a communication system according to an embodiment of this application;
FIG. 2 is a diagram of a low-power wake-up scenario according to an embodiment of this application;
FIG. 3 is a diagram of an architecture of a communication apparatus according to an embodiment of this application;
FIG. 4 is a schematic interaction flowchart of a data transmission method according to an embodiment of this application;
FIG. 5 is a diagram of a gap occasion according to an embodiment of this application;
FIG. 6 is a diagram of another gap occasion according to an embodiment of this application;
FIG. 7 is a schematic interaction flowchart of another data transmission method according to an embodiment of this application;
FIG. 8 is a block diagram of a communication apparatus according to an embodiment of this application;

and
FIG. 9 is a block diagram of another communication apparatus according to an embodiment of this application.

**DESCRIPTION OF EMBODIMENTS**

The following describes technical solutions of this application with reference to accompanying drawings.

The communication method provided in this application may be applied to various communication systems, for example, a long term evolution (Long Term Evolution, LTE) system, an advanced long term evolution (Advanced long term evolution, LTE-A) system, a 5th generation (5th-Generation, 5G) communication system, a 6th generation (6th Generation, 6G) mobile communication system, another communication system, or a future communication system.

The terminal device in embodiments of this application may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), an intelligent wearable device, a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

A network device is an access device through which the terminal device accesses a mobile communication system in a wireless manner, and may be a base station such as a NodeB, an evolved base station such as an evolved NodeB (eNodeB), a base station in a new radio access technology (new radio access technology, NR) mobile communication system, a base station in a future mobile communication system, an access node in a Wi-Fi system, or the like. The network device may provide a service for the terminal device in a form in which a central unit (central unit, CU) and a distributed unit (distributed unit, DU) are separated. A specific technology and a specific device form that are used by the network device are not limited in embodiments of this application.c

In embodiments of this application, both the terminal device and the network device may be deployed on land, including an indoor device, an outdoor device, a handheld device, a wearable device, or a vehicle-mounted device, or may be deployed on water (for example, on a ship), or may be deployed in air (for example, on an airplane, a balloon, and a satellite).

Communication between the network device and the terminal device and communication between terminal devices may be performed by using a licensed spectrum (licensed spectrum), an unlicensed spectrum (unlicensed spectrum), or both a licensed spectrum and an unlicensed spectrum. The communication between the network device and the terminal device and the communication between the terminal devices may be performed by using a spectrum below 6 gigahertz (gigahertz, GHz), or may be performed by using a spectrum at 6 GHz or above, or may be performed by using both a spectrum below 6 GHz and a spectrum at 6 GHz or above. A spectrum resource used between the network device and the terminal device is not limited in embodiments of this application.

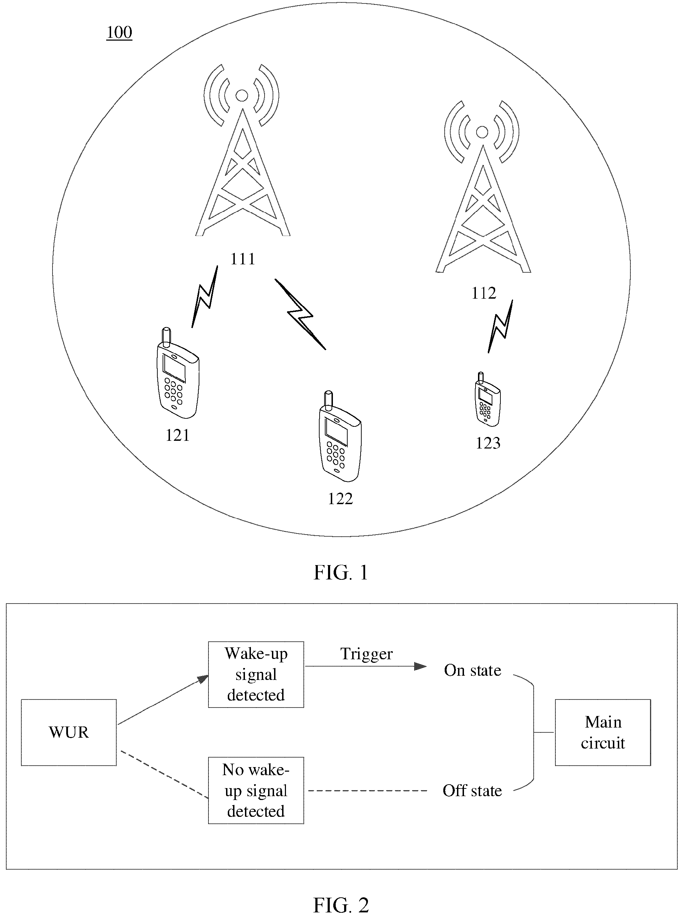

For ease of understanding of embodiments of this application, a communication system applicable to embodiments of this application is first described in detail with reference to FIG. 1. FIG. 1 is a diagram of a communication system applicable to a communication method according to an embodiment of this application. As shown in FIG. 1, a communication system 100 may include a network device and a terminal device. There may be one or more network devices and terminal devices, for example, network devices 111 and 112 and terminal devices 121 to 123 shown in FIG. 1. In the communication system 100, the network device 111 may communicate with at least one of the terminal devices 121 and 122 through a wireless air interface, the terminal devices 121 and 122 are located in a same serving cell, and the network device 112 may communicate with the terminal device 123 through a wireless air interface. The network device 111 is a network device in a neighbor cell of the terminal device 123, and the network device 112 is a network device in a neighbor cell of the terminal devices 121 and 122.

It should be understood that a communication system 101 may be a subsystem of the communication system 100 or a communication system independent of the communication system 100. A communication system 102 may be a subsystem of the communication system 100 or a communication system independent of the communication system 100.

Regardless of whether the terminal device in the communication system shown in FIG. 1 receives paging in an idle (idle) state/inactive (inactive) state or receives data in a connected state, the terminal device may use a main receiver (main receiver, MR, or referred to as a main circuit) in the terminal device to complete these functions. In this embodiment, that the terminal device receives a signal by using the main receiver is also referred to as operating on a primary link, or is also referred to as that the main receiver is in an operating state. It may be understood that the main circuit (or the main receiver) is merely a name for differentiation, and a specific name of the main circuit (or the main receiver) does not limit the protection scope of this application. For ease of description, the MR is collectively used for description below.

A signal received by the terminal device by using the main circuit may be referred to as being transmitted on the primary link. The primary link represents a connection relationship between the terminal device and the network device, and is a logical concept rather than a physical entity. It may be understood that the primary link is merely a name for differentiation, and a specific name of the primary link does not limit the protection scope of this application. FIG. 2 is a diagram of a low-power wake-up scenario according to an embodiment of this application. As shown in FIG. 2, to reduce power consumption of the terminal device, the terminal device may further receive a signal through a separate low-power small circuit. The low-power small circuit may be implemented through a separate small circuit or a chip with a simple structure, which has low power consumption. The low-power small circuit may be, for example, referred to as a wake-up radio (wake-up radio, WUR), or may be referred to as a wake-up circuit, or may be referred to as a low-power circuit, or may be referred to as a wake-up receiver (wake-up receiver, WUR), or may be referred to as a low-power wake-up receiver (low-power wake-up receiver, LP-WUR). A name of the low-power small circuit is not limited in this application. In this application, for ease of description, the low-power small circuit is referred to as a wake-up circuit. It may be understood that the wake-up circuit is merely a name for differentiation, and a specific name of the wake-up circuit does not limit the protection scope of this application. For ease of description, the wake-up circuit is collectively used for description below.

A WUR module is configured to: receive a wake-up signal (wake-up signal, WUS, also referred to as a low-power wake-up signal (low-power wake-up signal, LP-WUS)) sent by the network device, and demodulate wake-up indication information based on an information bit carried in the WUS, to wake up a main receiver or a main receiving module that is disabled (or that is in a sleep state) in the terminal device. In this embodiment, that the terminal device receives the wake-up signal by using the WUR module is also referred to as operating on a WUR link, or is also referred to as that the WUR module is in an operating state. The wake-up signal may be used to wake up at least one terminal device or at least one group of terminal devices. In an example, the wake-up signal includes wake-up information. The wake-up information indicates information related to waking up the terminal device. For example, the wake-up information is information related to paging. For example, the wake-up information may be used by the terminal device to determine whether to perform a paging receiving procedure, or may be used by the terminal device to determine whether to initiate random access. When paging information carried in the wake-up signal indicates a paged terminal device, the wake-up information may include information (such as a UE ID) about one or more terminal devices that need to be woken up. In this case, a woken-up terminal device may directly initiate random access after the MR is started. When the paging information carried in the wake-up signal indicates a paged terminal device group (UE group), the wake-up information may include a group identifier of the terminal device group. In this case, a woken-up terminal device in the group may continue to receive paging information on a PO after the MR is started, to determine whether the terminal device is paged. In some scenarios, the wake-up signal may further carry scheduling information. In this case, the terminal device is in a connected state, and the wake-up signal indicates whether the terminal device needs to start an MR to receive the scheduling information (for example, whether a physical downlink control channel (physical downlink control channel, PDCCH) needs to be monitored).

In an NR system, the terminal device may implement cell reselection through radio resource management (radio resource management, RRM) measurement. The RRM measurement may include serving cell (serving cell) measurement and neighbor cell (neighbor cell) measurement. The neighbor cell measurement includes intra-frequency (intra-frequency) measurement, inter-frequency (inter-frequency) measurement, and inter-system (inter-RAT) measurement. It should be understood that the intra-frequency measurement means that a serving cell of a terminal device and a to-be-measured neighbor cell are on a same carrier frequency. The inter-frequency measurement means that a serving cell of a terminal device and a to-be-measured neighbor cell are not on a same carrier frequency. The inter-system measurement means that a serving cell of a terminal device and a to-be-measured neighbor cell are not in a same communication system or do not use a same communication standard. For example, the serving cell is in a 5G system, and the neighbor cell is in a 4G communication system or uses a 4G communication standard.

A carrier frequency of the serving cell may also be referred to as a working frequency of the serving cell, and a carrier frequency of the neighbor cell may also be referred to as a working frequency of the neighbor cell. In an RRM measurement scenario, when the terminal device receives a reference signal at the working frequency of the serving cell to implement the serving cell measurement, the working frequency of the serving cell may also be referred to as a measurement frequency of the serving cell. Similarly, when the terminal device receives a reference signal at the working frequency of the neighbor cell to implement the neighbor cell measurement, the working frequency of the neighbor cell may also be referred to as a measurement frequency of the neighbor cell.

Based on the example of the low-power wake-up scenario shown in FIG. 2, in embodiments of this application, that the terminal device performs RRM measurement may include the following two possible scenarios:

Scenario 1: The MR in the terminal device is in an on state.

In Scenario 1, the terminal device may perform serving cell measurement and neighbor cell measurement by using the MR. When the terminal device performs inter-frequency measurement, the terminal device switches a measurement frequency of the MR to the measurement frequency of the neighbor cell.

Scenario 2: The MR in the terminal device is in an off state.

In Scenario 2, the terminal device may perform serving cell measurement and neighbor cell measurement in the following several possible manners:

Manner 1: The terminal device switches a current communication apparatus from the WUR to the MR, and performs serving cell measurement and neighbor cell measurement by using the MR. Manner 1 is applicable to a case in which the WUR does not support RRM measurement or the WUR does not have an RRM measurement capability.

Manner 2: The terminal device performs serving cell measurement by using the WUR, and performs neighbor cell measurement by using the MR. Manner 2 is applicable to a case in which the WUR does not support neighbor cell measurement, or the WUR does not have a neighbor cell measurement capability. For example, in the inter-system measurement, the terminal device may switch the WUR to the MR for neighbor cell measurement.

Manner 3: The terminal device performs serving cell measurement and neighbor cell measurement by using the WUR. In this case, when the terminal device performs inter-frequency measurement, the terminal device switches a measurement frequency (or a working frequency) of the WUR to the measurement frequency (or the working frequency) of the neighbor cell.

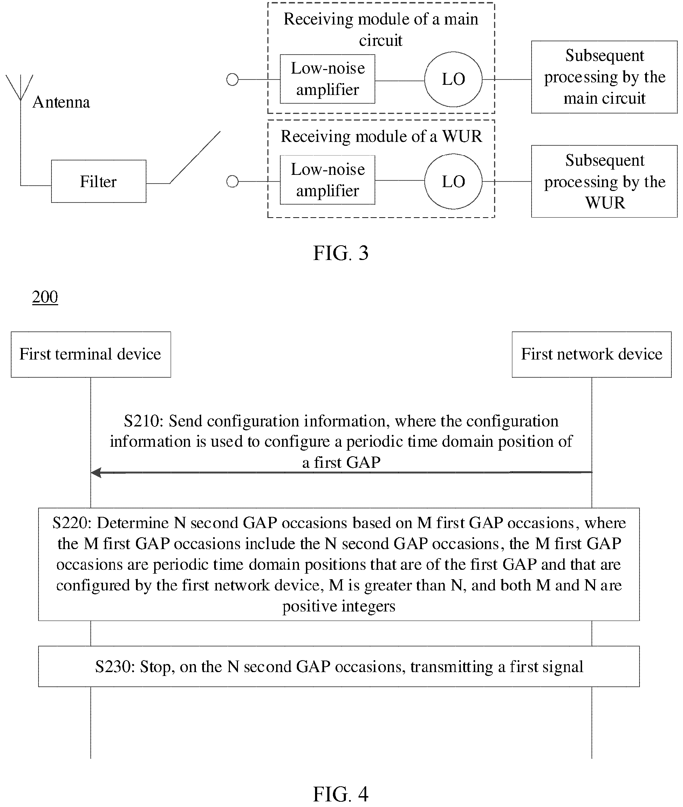

In Manner 1 and Manner 2, the terminal device switches the current communication apparatus from the WUR to the MR. The following is described with reference to a diagram of an architecture of a communication apparatus shown in FIG. 3. As shown in FIG. 3, after being connected to a filter, an antenna is connected to a receiving module of the WUR or a receiving module of the MR through an antenna switch. For example, both the receiving module of the WUR and the receiving module of the MR may include a low-noise amplifier (low-noise amplifier) and a local oscillator (local oscillator, LO). Both performance and power consumption of the low-noise amplifier in the receiving module of the WUR are low. Both performance and power consumption of the low-noise amplifier in the receiving module of the MR are high. Both precision and power consumption of the LO in the receiving module of the WUR are low, which may be, for example, implemented based on a ring oscillator. Both precision and power consumption of the LO in the receiving module of the MR are low, which may be, for example, implemented based on a phase-locked loop. Optionally, after receiving a signal by using the receiving module, the WUR may further process the signal. Similarly, after receiving a signal by using the receiving module, the MR may further process the signal.

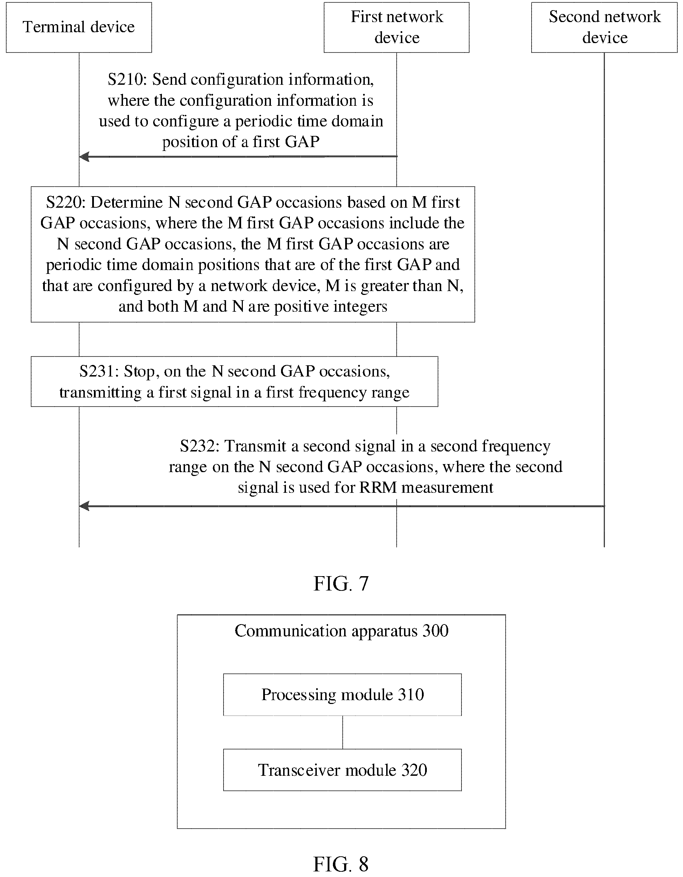

Modules/Components and connection relationships between the modules/components shown in FIG. 3 are merely an example rather than a limitation. During specific implementation, more or fewer modules/components than those shown in FIG. 7 may be further included.

It should be understood that, when the terminal device performs RRM measurement by using the MR, a received reference signal may be a synchronization signal block (synchronization signal block, SSB). When the terminal device performs RRM measurement by using the WUR, a received reference signal may include a low-power measurement reference signal (low-power measurement reference signal), where the low-power measurement reference signal may be periodically sent. In a case, the received reference signal may also include a synchronization signal (low-power synchronization signal, LP-SS), where a low-power consumption synchronization signal may be periodically sent.

It should be further understood that, when the terminal device performs inter-frequency measurement by using the MR in Scenario 1 or performs inter-frequency measurement by using the WUR in Manner 3 of Scenario 2, the measurement frequency needs to be switched to the measurement frequency of the neighbor cell. In Manner 1 and Manner 3 of Scenario 2, the terminal device switches the current communication apparatus from the WUR to the MR, to perform serving cell measurement or neighbor cell measurement by using the MR. Regardless of whether the terminal device performs measurement frequency switching or communication apparatus switching, communication of the terminal device on an original measurement frequency (or working frequency) or by using an original communication apparatus is interrupted. Therefore, it is considered that a measurement GAP is configured, so that the terminal device can perform inter-frequency measurement or inter-system measurement in the measurement GAP.

To enable configured measurement GAPs to meet measurement requirements of different terminal devices, GAPs configured by the network device are usually dense, causing high resource occupation of the measurement GAPs.

For the problem of high resource occupation of the measurement GAPs, in an embodiment of this application, a terminal device determines some measurement GAP occasions from measurement GAP occasions (occasions) of the configured measurement GAPs, and does not receive, on the determined some measurement GAP occasions, a first signal sent by a network device. The first signal may be a signal transmitted on a frequency before frequency switching, or may be a signal that can be received by a communication apparatus before communication apparatus switching. This prevents the configured GAPs from occupying a large quantity of resources.

It should be noted that, for ease of understanding, in this embodiment of this application, only an example in which a measurement GAP and a terminal device perform inter-frequency measurement or inter-system measurement in a measurement GAP is used for description. However, that a configured GAP is a measurement GAP and that the terminal device performs measurement in the GAP are not limited in this application. The GAP may be understood as a periodic time domain position at which the terminal device does not receive the first signal.

That the terminal device determines some GAP occasions from a plurality of GAP occasions of the configured GAP may also be expressed as selecting some GAP occasions from the plurality of GAP occasions of the configured GAP. In this application, meanings expressed by "determining" and "selecting" used alternately are consistent.

It should be further understood that, when a GAP occasion is used by the terminal device (or a GAP occasion corresponds to the terminal device), the network device cannot send the first signal to the terminal device on the GAP occasion. Therefore, there are less available resources of the network device for sending the first signal to the terminal device. Less available resources of the network device for sending the first signal may be understood as higher GAP overheads, that is, higher resource occupation of the GAP.

In this embodiment of this application, the terminal device determines some GAP occasions, that is, GAP occasions used by the terminal device, from the plurality of GAP occasions of the configured GAP. However, on an unselected GAP occasion in the plurality of GAP occasions of the configured GAP, the network device may still send the first signal to the terminal device. In other words, the GAP occasion that is not selected by the terminal device does not occupy available resources for communication between the terminal device and the network device.

The following describes a communication method provided in embodiments of this application with reference to the accompanying drawings.

It should be understood that, for ease of understanding and description, the following mainly describes the method provided in embodiments of this application by using interaction between a first terminal device and a first network device as an example. For example, the first terminal device may be a first terminal device 121 or 122 in FIG. 1, and the first network device may be a network device 111 in FIG. 1. Alternatively, the first terminal device may be a first terminal device 123 in FIG. 1, and the first network device may be a network device 112 in FIG. 1.

In some embodiments, interaction between the first terminal device and a second network device is used as an example to further describe the method provided in embodiments of this application. For example, the first terminal device may be the first terminal device 121 or 122 in FIG. 1, and the second network device may be the network device 112 in FIG. 1. Alternatively, the first terminal device may be the first terminal device 123 in FIG. 1, and the second network device may be the network device 111 in FIG. 1.

Optionally, the first terminal device may be used in the low-power wake-up scenario shown in FIG. 2.

However, it should be understood that this shall not constitute any limitation on an execution body of the method provided in this application. Any device that can perform, by using a program that runs code of the method provided in embodiments of this application, the method provided in embodiments of this application may be used as the execution body of the method provided in embodiments of this application. For example, the first terminal device shown in the following embodiments may also be replaced with a component in the first terminal device, for example, a chip, a chip system, or another functional module that can invoke a program and execute the program. The network device shown in the following embodiments may also be replaced with a component in the network device, for example, a chip, a chip system, or another functional module that can invoke a program and execute the program.

FIG. 4 is a schematic interaction flowchart of a data transmission method 200 according to an embodiment of this application. As shown in FIG. 4, the method 200 may include some or all processes in S210 to S230. The following describes the steps in the method 200.

S210: A first network device sends configuration information to a first terminal device, where the configuration information is used to configure a periodic time domain position of a first GAP. Correspondingly, the first terminal device receives the configuration information sent by the first network device.

S220: Both the first terminal device and the first network device determine N second GAP occasions based on M first GAP occasions, where the M first GAP occasions include the N second GAP occasions, the M first GAP occasions are periodic time domain positions that are of the first GAP and that are configured by the first network device, M is greater than N, and both M and N are positive integers.

S230: Stop, on the N second GAP occasions, transmitting a first signal. In other words, the first network device stops, on the N second GAP occasions, sending the first signal, and the first terminal device stops, on the N second GAP occasions, receiving the first signal.

It should be noted that the time domain position of the first GAP in each GAP periodicity is one GAP occasion. The time domain positions of the first GAP in GAP periodicities include the M first GAP occasions. The M first GAP occasions may be all or some of the configured time domain positions of the first GAP. This is not limited in this application.

It should be further understood that the M first GAP occasions cover GAP occasions (for example, the N second GAP occasions) required by the first terminal device, and a quantity of the M first GAP occasions is greater than a quantity of the GAP occasions required by the first terminal device. For example, the M first GAP occasions may be dense GAP occasions that are configured by a network device to meet measurement requirements of a plurality of terminal devices. The plurality of terminal devices may be all or some of terminal devices in a serving cell of the first network device, and the first terminal device is any one of the plurality of terminal devices.

The first network device may send the configuration information to all of the plurality of terminal devices including the first terminal device, to configure the first GAP for each terminal device. Each terminal device may determine respective second GAP occasion based on the periodic time domain position that is of the first GAP and that is configured by the first network device. Correspondingly, the first network device may determine the second GAP occasion of each terminal device based on the configured periodic time domain position of the first GAP.

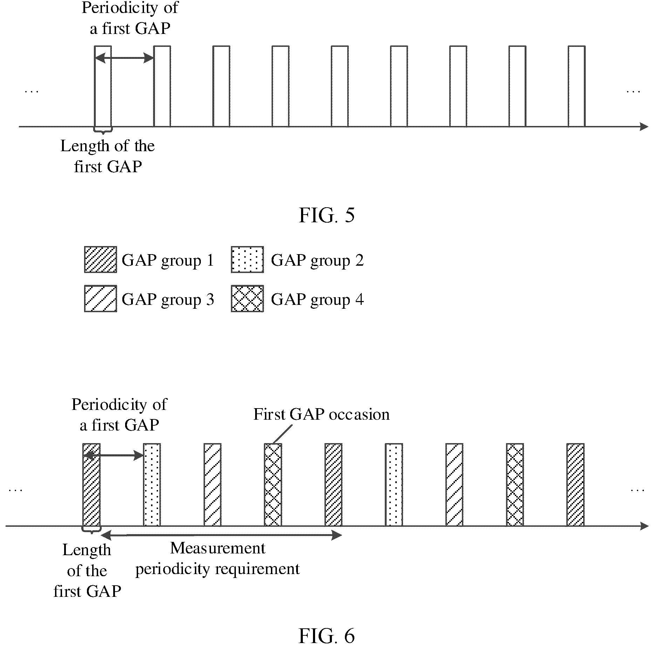

Optionally, the configuration information may include at least one of a periodicity, an offset value, and a time domain length of the first GAP. Refer to FIG. 5. The plurality of GAP occasions of the first GAP (for example, the M first GAP occasions) may be determined based on the periodicity, the offset, and the time domain length of the first GAP. The offset of the first GAP is an offset between a start position of the first GAP and a reference point, and the offset is used to determine a time domain start position of the first GAP occasion with reference to the periodicity of the first GAP.

The N second GAP occasions may be GAP occasions that are in the M first GAP occasions and that have a mapping relationship with the first terminal device. For example, the mapping relationship may be a mapping relationship between an identifier (for example, UE_ID) of the first terminal device and the first GAP. For another example, the mapping relationship may be a mapping relationship between an identifier (for example, group_ID) of a terminal device group to which the first terminal device belongs and the first GAP.

For example, the M first GAP occasions may be divided into W groups, where W is a positive integer. The N second GAP occasions may be some or all of first GAP occasions in a group of the W groups. With reference to FIG. 6, it is assumed that W is equal to 4. To be specific, the M first GAP occasions are divided into four groups of GAP occasions (for example, GAP group 1 to GAP group 4), and one second GAP occasion corresponding to the first terminal device is included in every four first GAP occasions in the M first GAP occasions.

The mapping relationship between the first terminal device and the first GAP may be represented by using the following formula:

$$D \bmod W = i \bmod W$$

i is an identifier (for example, an index (index)) of the first GAP, and mod represents a modulo (or referred to as a modulo) operation.

In a first embodiment, D in the foregoing formula may be the identifier (for example, UE_ID) of the first terminal device. For example, the M first GAP occasions are divided into four groups, and a terminal device whose identifier is 1 has a mapping relationship with a $1^{st}$ first GAP occasion, a $5^{th}$ first GAP occasion, a $9^{th}$ first GAP occasion, and the like. In other words, when the identifier of the first terminal device is 1, the N second GAP occasions corresponding to the first terminal device include the $1^{st}$ first GAP occasion, the $5^{th}$ first GAP occasion, the $9^{th}$ first GAP occasion, and the like.

In a second embodiment, D in the foregoing formula may be the identifier (for example, group_ID) of the terminal device group to which the first terminal device belongs. For example, the M first GAP occasions are divided into four groups, and a group whose identifier is 1 has a mapping relationship with a $1^{st}$ first GAP occasion, a $5^{th}$ first GAP occasion, a $9^{th}$ first GAP occasion, and the like. In other words, when the identifier of the group to which the first terminal device belongs is 1, the N second GAP occasions corresponding to the first terminal device include the $1^{st}$ first GAP occasion, the $5^{th}$ first GAP occasion, the $9^{th}$ first GAP occasion, and the like.

In the second embodiment, the identifier (for example, group_ID) of the terminal device group to which the first terminal device belongs may be configured by the network device, or may be obtained through calculation based on the identifier (for example, UE_ID) of the first terminal device.

Further, to enable the N second GAP occasions to better meet the measurement requirement, the M first GAP occasions may be divided into W groups based on a measurement periodicity L. The measurement periodicity L may be a measurement periodicity that meets a measurement periodicity requirement (requirement). The measurement periodicity requirement may be predefined (for example, defined in a protocol). For example, the measurement periodicity L may be equal to the measurement periodicity requirement. Alternatively, when the measurement periodicity L meets the measurement periodicity requirement, the measurement periodicity may be determined with reference to a sending periodicity of a reference signal of the network device and a requirement of a communication service on communication quality.

In an implementation of dividing the M first GAP occasions into W groups based on the measurement periodicity L, W may be equal to a quotient of a periodicity T of the first GAP and the measurement periodicity L. For example, with reference to FIG. 6, assuming that the periodicity of the first GAP is 3.2 seconds (s), and the measurement periodicity requirement is 12.8s, W may be equal to 4. Further, the N second GAP occasions determined by the first terminal device based on W better meet a measurement requirement of the first terminal device, so that reliability of RRM measurement is improved.

In another implementation, W may be less than the quotient of the periodicity T of the first GAP and the measurement periodicity L. In this case, the first terminal device may determine denser second GAP occasions. For example, the periodicity of the first GAP is 3.2s, the measurement periodicity requirement is 12.8s, W is equal to 2, and there is one second GAP occasion in every two first GAP occasions. When density of the second GAP occasions is increased, impact of a small quantity of second GAP occasions on accuracy of the RRM measurement of the first terminal device can be avoided.

By adjusting a degree to which W is less than the quotient of the periodicity T of the first GAP and the measurement periodicity L, GAP overheads can be flexibly controlled.

In S220, an implementation in which the first network device determines the N second GAP occasions is similar to the implementation in which the first terminal device determines the N second GAP occasions. Details are not described herein again. A sequence of performing S210 and S220 by the first network device is not limited in this embodiment of this application. For example, the first network device may determine the N second GAP occasions before sending the configuration information, or the first network device may determine the N second GAP occasions after sending the configuration information.

That the first terminal device stops receiving, on the N second GAP occasions, the first signal sent by the first network device may be expressed as that the first terminal device does not receive, on the N second GAP occasions, the first signal sent by the first network device, or may be expressed as that the first terminal device deactivates (deactivates), on the N second GAP occasions, receiving of the first signal sent by the first network device.

In some examples of S230, on the N second GAP occasions, the first terminal device does not expect to receive the first signal sent by the first network device, or the first terminal device does not expect to monitor the first signal sent by the first network device, or the first terminal device does not need to receive the first signal sent by the first network device, or the first terminal device does not need to monitor the first signal sent by the first network device.

Correspondingly, that the first network device stops, on the N second GAP occasions, sending the first signal to the first terminal device may be expressed as that the first network device does not send the first signal to the first terminal device on the N second GAP occasions, or may be expressed as that the first network device deactivates (deactivates), on the N second GAP occasions, sending of the first signal.

Therefore, with reference to the method 200 shown in FIG. 5, in this embodiment of this application, some GAP occasions are determined from the plurality of GAP occasions configured by the first network device, to prevent the configured GAP from occupying a large quantity of resources and reduce resource occupation of the GAP.

In some embodiments, the configuration information may be carried in a broadcast message sent by the first network device, so that a terminal device in an idle state or an inactive state receives the configuration information, to resolve a problem in which the terminal device currently in the idle state or the inactive state cannot determine a measurement GAP. Certainly, that the first terminal device is in the idle state or the inactive state when receiving the broadcast message is not limited in this application. For example, the first terminal device may be in a connected (connected) state.

Optionally, the broadcast message includes radio resource control (radio resource control, RRC) signaling. The RRC signaling includes the configuration information of the first GAP, and the RRC signaling may be sent by using a system information block (system information block, SIB).

FIG. 7 is a schematic interaction flowchart of another data transmission method according to an embodiment of this application. With reference to FIG. 7, in this embodiment of this application, an example in which the first GAP is a measurement GAP, that is, inter-frequency measurement or inter-system measurement is performed in N second GAPs of the first terminal device is used for description. As shown in FIG. 7, based on the method shown in FIG. 5, the method provides a possible implementation for S230 in FIG. 5, and specifically includes at least some of the following steps.

S231: The first terminal device and the first network device stop, on the N second GAP occasions, transmitting the first signal in a first frequency range.

S232: A second network device sends a second signal to the first terminal device in a second frequency range on the N second GAP occasions, where the second signal is used for RRM measurement. Correspondingly, the first terminal device receives, in the second frequency range, the second signal sent by the second network device.

It should be noted that, when the terminal device performs measurement by using an MR, a measurement frequency of a serving cell may be a frequency domain position/frequency range of an SSB of the serving cell, and a measurement frequency of a neighbor cell may be a frequency domain position/frequency range of an SSB of the neighbor cell. When the terminal device performs measurement by using a WUR, the measurement frequency of the serving cell may be a frequency domain position/frequency range at which the first signal of the serving cell is sent, or may be referred to as a working frequency for receiving the first signal in the serving cell, that is, the first frequency range. The measurement frequency of the neighbor cell may be a frequency domain position at which the second signal of the neighbor cell is sent, or may be referred to as a working frequency for receiving the second signal in the neighbor cell, that is, the second frequency range.

With reference to the low-power wake-up scenario shown in FIG. 2, the first terminal device may receive, outside of the N second GAP occasions by using the WUR, the first signal sent by the first network device. For example, the first signal may include at least one of an LP-WUS, a low-power measurement signal, and a low-power synchronization signal. Optionally, the first terminal device may further receive, in the first frequency range by using the WUR, the configuration information sent by the first network device. In this case, on the N second GAP occasions, the first terminal device may fail to receive the first signal due to measurement frequency switching or communication apparatus switching.

Certainly, this is not limited in this application. Alternatively, the first signal may be any signal received by the MR on the measurement frequency (or the working frequency) of the serving cell. For example, an MR of the first terminal device is in an on state, and the first terminal device may receive, outside of the N second GAP occasions by using the MR in the first frequency range, the first signal sent by the first network device. In this case, on the N second GAP occasions, the first terminal device may fail to receive the first signal due to measurement frequency switching.

That the first terminal device and the first network device stop transmitting the first signal in the first frequency range includes: The first terminal device stops receiving the first signal in the first frequency range, and the first network device stops sending the first signal in the first frequency range. As described above, stopping receiving may also be expressed as not receiving or deactivating receiving, and stopping sending may also be expressed as not sending or deactivating sending.

As described above, the first terminal device may perform neighbor cell measurement, for example, inter-frequency measurement or inter-system measurement, on the N second GAP occasions. The second frequency range may be a frequency range in which the measurement frequency of the neighbor cell is located. In this way, the first network device and the first terminal device align time domain positions occupied for the neighbor cell measurement, so that communication stability is improved.

In an implementation of S232, the first terminal device may receive the second signal in the second frequency range by using a first communication apparatus. The first communication apparatus may be a WUR. When the MR of the first terminal device is in an off state, the first terminal device may receive the signal of the first network device and/or the second network device by using the WUR. For example, the first terminal device receives the first signal outside of the N second GAP occasions by using the WUR in the first frequency range in which the frequency of the serving cell is located, switches the WUR to the measurement frequency of the neighbor cell on the N second GAP occasions, and further receives the second signal in the second frequency range in which the measurement frequency of the neighbor cell is located. Optionally, the second signal may include a measurement reference signal of the neighbor cell.

In another implementation of S232, the first terminal device may receive the second signal in the second frequency range by using a second communication apparatus. For example, the second communication apparatus may be an MR. The first terminal device may receive the first signal outside of the N second GAP occasions by using the first communication apparatus (for example, the WUR) in the first frequency range in which the frequency of the serving cell is located, switch the communication apparatus from the WUR to the MR on the N second GAP occasions, and receive, by using the MR, the second signal in the second frequency range in which the measurement frequency of the neighbor cell is located. Optionally, the second signal may include a measurement reference signal of the serving cell or the measurement reference signal of the neighbor cell. It should be understood that, when the second signal includes the measurement reference signal of the serving cell, the first communication apparatus may be a communication apparatus that does not support RRM measurement or does not have an RRM measurement capability. When the second signal includes the measurement reference signal of the neighbor cell, the first communication apparatus may be a communication apparatus that does not support neighbor cell measurement or does not have a neighbor cell measurement capability.

Therefore, in the embodiment shown in FIG. 7, the first terminal device receives, in the second frequency range, the second signal used for RRM measurement, to implement neighbor cell measurement without affecting communication reliability of the serving cell.

In some embodiments, the time domain length of the first GAP is greater than or equal to duration for measuring a reference signal of the neighbor cell, so that the first terminal device can completely receive, on each second GAP occasion, a reference signal sent in one reference signal periodicity of the neighbor cell.

Further, when the first terminal device receives the second signal in the second frequency range, frequency switching needs to be performed, for example, the measurement frequency of the serving cell needs to be switched to the measurement frequency of the neighbor cell. In this case, the time domain length of the first GAP should further include duration for measurement frequency switching, for example, a time for a radio frequency front-end switch to switch between different frequencies. In this case, the time domain length of the first GAP may be several milliseconds or tens of milliseconds. Alternatively, when the first terminal device receives the second signal in the second frequency range, the first communication apparatus needs to be switched to the second communication apparatus. In this case, the time domain length of the first GAP should further include duration for switching from the first communication apparatus to the second communication apparatus. In this case, the time domain length of the first GAP may be several milliseconds (ms) or tens of milliseconds. The first communication apparatus is configured to receive the first signal in the first frequency range, and the second communication apparatus is configured to receive the second signal in the second frequency range.

In some embodiments, when the second communication apparatus performs communication apparatus switching (for example, switching from the first communication apparatus to the first communication apparatus), the second communication apparatus is not started, and the time domain length of the first GAP should further include duration for starting the second communication apparatus. In this case, the time domain length of the first GAP may be several milliseconds or several seconds. Certainly, if the second communication apparatus has been started before the second communication apparatus performs communication apparatus switching (for example, switching from the first communication apparatus to the first communication apparatus), duration of the first GAP does not include the duration for starting the second communication apparatus.

For example, the first communication apparatus is a WUR and the second communication apparatus is an MR. The MR may be started under wakeup of the WUR. As described above, the WUR may wake up the MR after receiving an LP-WUS. In addition, the WUR may periodically wake up the MR. This is not limited in this application.

Considering that the duration of the first GAP can cover at least one of the duration for measurement frequency switching, the duration for communication apparatus switching, and the duration for starting the second communication apparatus, in different measurement scenarios, the first terminal device can completely receive, on each second GAP occasion, the reference signal sent in one reference signal periodicity of the neighbor cell.

FIG. 8 is a block diagram of a communication apparatus according to an embodiment of this application. As shown in FIG. 8, the apparatus 300 may include a processing module 310 and a transceiver module 320.

Optionally, the communication apparatus 300 may correspond to the terminal device in the foregoing method embodiments. For example, the communication apparatus 300 may be a terminal device or a component (such as a chip or a chip system) disposed in the terminal device.

When the communication apparatus 300 is configured to perform a method on a terminal side, the processing module 310 may be configured to determine N second GAP occasions based on M first gap (GAP) occasions. The M first GAP occasions include the N second GAP occasions, the M first GAP occasions are periodic time domain positions that are of a first GAP and that are configured by a first network device, M is greater than N, and both M and N are positive integers. The transceiver module 320 may be configured to stop, on the N second GAP occasions, receiving a first signal sent by the first network device.

It should be understood that a specific execution process of the modules is described in detail in the foregoing method embodiments. For brevity, details are not described herein again.

Optionally, the communication apparatus 300 may correspond to the network device in the foregoing method embodiments. For example, the communication apparatus 300 may be a network device or a component (such as a chip or a chip system) disposed in the network device.

When the communication apparatus 300 is configured to perform a method on a network side, the processing module 310 may be configured to determine N second GAP occasions based on M first GAP occasions. The M first GAP occasions include the N second GAP occasions, the M first GAP occasions are periodic time domain positions that are of a first GAP and that are configured by the communication apparatus, M is greater than N, and both M and N are positive integers. The transceiver module 320 may be configured to stop, on the N second GAP occasions, sending a first signal to a first terminal device.

It should be understood that a specific execution process of the modules is described in detail in the foregoing method embodiments. For brevity, details are not described herein again.

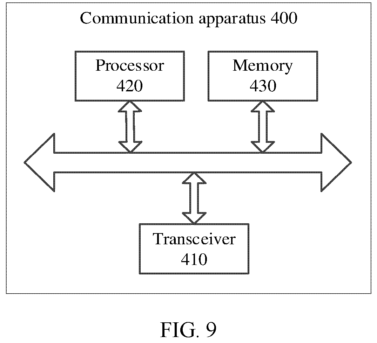

The transceiver module 320 in the communication apparatus 300 may be implemented by using a transceiver. For example, the transceiver module 320 may correspond to a transceiver 410 in a communication apparatus 400 shown in FIG. 9. The processing module 310 in the communication apparatus 300 may be implemented by using at least one processor. For example, the processing module 310 may correspond to a processor 420 in the communication apparatus 400 shown in FIG. 9.

When the communication apparatus 300 is a chip or a chip system configured in a communication device (for example, the terminal device or the network device), the transceiver module 320 in the communication apparatus 300 may be implemented through an input/output interface, a circuit, or the like. The processing module 310 in the communication apparatus 300 may be implemented by using a processor, a microprocessor, an integrated circuit, or the like integrated in the chip or the chip system.

FIG. 9 is a block diagram of another communication apparatus according to an embodiment of this application. As shown in FIG. 9, a communication apparatus 400 may include a transceiver 410, a processor 420, and a memory 430. The transceiver 410, the processor 420, and the memory 430 communicate with each other through an internal connection path, the memory 430 is configured to store instructions, and the processor 420 is configured to execute the instructions stored in the memory 430, to control the transceiver 410 to send and/or receive a signal.

It should be understood that the communication apparatus 400 may correspond to the terminal device or the network device in the foregoing method embodiments, and may be configured to perform steps and/or procedures performed by the terminal device or the network device in the foregoing method embodiments. Optionally, the memory 430 may include a read-only memory and a random access memory, and provide instructions and data for the processor. A part of the memory may further include a non-volatile random access memory. The memory 430 may be an independent component, or may be integrated into the processor 420. The processor 420 may be configured to execute the instructions stored in the memory 430. When the processor 420 executes the instructions stored in the memory, the processor 420 is configured to perform the steps and/or procedures of the foregoing method embodiments corresponding to the terminal device or the network device.

Optionally, the communication apparatus 400 is the terminal device in the foregoing embodiments.

Optionally, the communication apparatus 400 is the network device in the foregoing embodiments.

The transceiver 410 may include a transmitter machine and a receiver machine. The transceiver 410 may further include an antenna. There may be one or more antennas. The processor 420, the memory 430, and the transceiver 410 may be components integrated into different chips. For example, the processor 420 and the memory 430 may be integrated into a baseband chip, and the transceiver 410 may be integrated into a radio frequency chip. Alternatively, the processor 420, the memory 430, and the transceiver 410 may be components integrated into a same chip. This is not limited in this application.

Optionally, the communication apparatus 400 is a component configured in the terminal device, for example, a chip or a chip system.

Optionally, the communication apparatus 400 is a component configured in the network device, for example, a chip or a chip system.

Alternatively, the transceiver 420 may be a communication interface, for example, an input/output interface or a circuit. The transceiver 420, the processor 410, and the memory 430 may be integrated into a same chip, for example, integrated into the baseband chip.

This application further provides a processing apparatus, including at least one processor. The at least one processor is configured to execute a computer program stored in a memory, so that the processing apparatus performs the method performed by the terminal device or the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the terminal device or the network device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the method performed by the terminal device or the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed and completed by a hardware processor, or may be performed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example rather than a limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification include but are not limited to these and any memory of another proper type.

According to the method provided in embodiments of this application, this application further provides a computer program product. The computer program product includes computer program code. When the computer program code is run on a computer, the computer is enabled to perform the method performed by the terminal device or the network device in the foregoing method embodiments.

According to the method provided in embodiments of this application, this application further provides a computer-readable storage medium. The computer-readable storage medium stores program code. When the program code is run on a computer, the computer is enabled to perform the method performed by the terminal device or the network device in the foregoing method embodiments.

According to the method provided in embodiments of this application, this application further provides a communication system. The communication system may include the terminal device and the network device described above.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, a part that essentially contributes to the technical solutions of this application or a part of the technical solutions may be embodied in a form of software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

   determining, by a first terminal device, N second GAP occasions based on M first gap GAP occasions, wherein the M first GAP occasions comprise the N second GAP occasions, the M first GAP occasions are periodic time domain positions that are of a first GAP and that are configured by a first network device, M is greater than N, and both M and N are positive integers; and

   stopping, by the first terminal device on the N second GAP occasions, receiving a first signal sent by the first network device.

2. The method according to claim 1, further comprising: receiving, by the first terminal device, configuration information sent by the first network device, wherein the configuration information is used to configure the periodic time domain positions of the first GAP.

3. The method according to claim 2, wherein the configuration information comprises at least one of a periodicity, an offset value, and a time domain length of the first GAP.

4. The method according to any one of claims 1 to 3, wherein the N second GAP occasions are determined from the M first GAP occasions based on an identifier of the first terminal device or an identifier of a terminal device group to which the first terminal device belongs.

5. The method according to claim 4, wherein the M first GAP occasions are divided into W groups of GAP occasions, an $i^{th}$ first GAP occasion in the M first GAP occasions is the second GAP occasion, both i and W are positive integers, and i satisfies the following formula:

$$D \bmod W = i \bmod W,$$

   wherein mod represents a modulo operation, and D is the identifier of the first terminal device or the identifier of the terminal device group to which the first terminal device belongs.

6. The method according to claim 5, wherein W is determined based on a periodicity T of the first GAP and a measurement periodicity L, and the measurement periodicity is a periodicity in which the first terminal device measures a reference signal of a neighbor cell.

7. The method according to claim 6, wherein W is less than or equal to a quotient of the periodicity T of the first GAP and the measurement periodicity L.

8. The method according to claim 2 or 3, wherein the configuration information is carried in a broadcast message sent by the first network device.

9. The method according to claim 8, wherein the first terminal device is in an idle state or an inactive state when receiving the broadcast message.

10. The method according to any one of claims 1 to 9, wherein the first signal comprises at least one of the following:

    a low-power wake-up signal;
    a low-power measurement signal; and
    a low-power synchronization signal.

11. The method according to any one of claims 1 to 10, wherein the stopping, by the first terminal device, receiving a first signal sent by the first network device comprises:
    stopping, by the first terminal device, receiving the first signal in a first frequency range.

12. The method according to claim 11, further comprising:
    receiving, by the first terminal device on the N second GAP occasions, a second signal in a second frequency range, wherein the second frequency range is different from the first frequency range, and the second signal is used for radio resource management RRM measurement.

13. The method according to claim 12, wherein the receiving, by the first terminal device, a second signal in a second frequency range comprises:

    receiving, by the first terminal device, the second signal in the second frequency range by using a first communication apparatus, wherein the second signal is a measurement reference signal of a neighbor cell; or
    receiving, by the first terminal device, the second signal in the second frequency range by using a second communication apparatus, wherein the second signal is a measurement reference signal of a serving cell or a neighbor cell.

14. The method according to any one of claims 1 to 13, wherein

    the time domain length of the first GAP is greater than or equal to duration for measuring the reference signal of the neighbor cell; or
    the time domain length of the first GAP is greater than or equal to a sum of duration for measuring the reference signal of the neighbor cell and at least one of the following:

duration for measurement frequency switching;
duration for switching from the first communication apparatus to the second communication apparatus, wherein the first communication apparatus is configured to receive the first signal in the first frequency range; and
duration for starting the second communication apparatus, wherein the second communication apparatus is configured to receive the second signal in the second frequency range, wherein
the first frequency range is different from the second frequency range.

15. A data transmission method, comprising:

determining, by a first network device, N second GAP occasions based on M first GAP occasions, wherein the M first GAP occasions comprise the N second GAP occasions, the M first GAP occasions are periodic time domain positions that are of a first GAP and that are configured by the first network device, M is greater than N, and both M and N are positive integers; and
stopping, by the first network device on the N second GAP occasions, sending a first signal to a first terminal device.

16. The method according to claim 15, further comprising:
sending, by the first network device, configuration information to the first terminal device, wherein the configuration information is used to configure the periodic time domain positions of the first GAP.

17. The method according to claim 16, wherein the configuration information comprises at least one of a periodicity, an offset value, and a time domain length of the first GAP.

18. The method according to any one of claims 15 to 17, wherein the N second GAP occasions are determined from the M first GAP occasions based on an identifier of the first terminal device or an identifier of a terminal device group to which the first terminal device belongs.

19. The method according to claim 18, wherein the M first GAP occasions are divided into W groups of GAP occasions, an $i^{th}$ first GAP occasion in the M first GAP occasions is the second GAP occasion, both i and W are positive integers, and i satisfies the following formula:

$$D \bmod W = i \bmod W,$$

wherein mod represents a modulo operation, and D is the identifier of the first terminal device or the identifier of the terminal device group to which the first terminal device belongs.

20. The method according to claim 19, wherein W is determined based on a periodicity T of the first GAP and a measurement periodicity L, and the measurement periodicity is a periodicity in which the first terminal device measures a reference signal of a neighbor cell.

21. The method according to claim 20, wherein W is less than or equal to a quotient of the periodicity T of the first GAP and the measurement periodicity L.

22. The method according to claim 16 or 17, wherein the configuration information is carried in a broadcast message.

23. The method according to claim 22, wherein the first terminal device is in an idle state or an inactive state when receiving the broadcast message.

24. The method according to any one of claims 15 to 23, wherein the first signal comprises at least one of the following:

a low-power wake-up signal;
a low-power measurement signal; and
a low-power synchronization signal.

25. The method according to any one of claims 15 to 24, wherein the stopping, by the first network device, sending a first signal to a first terminal device comprises:
stopping, by the first network device, sending the first signal to the first terminal device in a first frequency range.

26. The method according to any one of claims 15 to 25, wherein

the time domain length of the first GAP is greater than or equal to duration for measuring the reference signal of the neighbor cell; or
the time domain length of the first GAP is greater than or equal to a sum of duration for measuring the reference signal of the neighbor cell and at least one of the following:

duration for measurement frequency switching;

duration for switching from a first communication apparatus to a second communication apparatus, wherein the first communication apparatus is configured to receive the first signal in the first frequency range; and

duration for starting the second communication apparatus, wherein the second communication apparatus is configured to receive the second signal in the second frequency range, wherein

the first frequency range is different from the second frequency range.

27. A communication apparatus, comprising:

a processing module, configured to determine N second GAP occasions based on M first gap GAP occasions, wherein the M first GAP occasions comprise the N second GAP occasions, the M first GAP occasions are periodic time domain positions that are of a first GAP and that are configured by a first network device, M is greater than N, and both M and N are positive integers; and

a transceiver module, configured to stop, on the N second GAP occasions, receiving a first signal sent by the first network device.

28. The apparatus according to claim 27, wherein the transceiver module is further configured to:
receive configuration information sent by the first network device, wherein the configuration information is used to configure the periodic time domain positions of the first GAP.

29. The apparatus according to claim 28, wherein the configuration information comprises at least one of a periodicity, an offset value, and a time domain length of the first GAP.

30. The apparatus according to any one of claims 27 to 29, wherein the N second GAP occasions are determined from the M first GAP occasions based on an identifier of the communication apparatus or an identifier of a terminal device group to which the communication apparatus belongs.

31. The apparatus according to claim 30, wherein the M first GAP occasions are divided into W groups of GAP occasions, an $i^{th}$ first GAP occasion in the M first GAP occasions is the second GAP occasion, both i and W are positive integers, and i satisfies the following formula:

$$D \bmod W = i \bmod W,$$

wherein mod represents a modulo operation, and D is the identifier of the communication apparatus or the identifier of the terminal device group to which the communication apparatus belongs.

32. The apparatus according to claim 31, wherein W is determined based on a periodicity T of the first GAP and a measurement periodicity L, and the measurement periodicity is a periodicity in which the communication device measures a reference signal of a neighbor cell.

33. The apparatus according to claim 32, wherein W is less than or equal to a quotient of the periodicity T of the first GAP and the measurement periodicity L.

34. The apparatus according to claim 28 or 29, wherein the configuration information is carried in a broadcast message sent by the first network device.

35. The apparatus according to claim 34, wherein the communication apparatus is in an idle state or an inactive state when receiving the broadcast message.

36. The apparatus according to any one of claims 27 to 35, wherein the first signal comprises at least one of the following:

a low-power wake-up signal;
a low-power measurement signal; and
a low-power synchronization signal.

37. The apparatus according to any one of claims 27 to 36, wherein the transceiver module is specifically configured to:
stop receiving the first signal in a first frequency range.

38. The apparatus according to claim 37, wherein the transceiver module is further configured to:
receive, on the N second GAP occasions, a second signal in a second frequency range, wherein the second frequency range is different from the first frequency range, and the second signal is used for radio resource management RRM measurement.

39. The apparatus according to claim 38, wherein the transceiver module is specifically configured to:

receive the second signal in the second frequency range by using a first communication apparatus, wherein the second signal is a measurement reference signal of a neighbor cell; or
receive the second signal in the second frequency range by using a second communication apparatus, wherein the second signal is a measurement reference signal of a serving cell or a neighbor cell.

40. The apparatus according to any one of claims 27 to 39, wherein

the time domain length of the first GAP is greater than or equal to duration for measuring a reference signal of a neighbor cell; or
the time domain length of the first GAP is greater than or equal to a sum of duration for measuring a reference signal of a neighbor cell and at least one of the following:

duration for measurement frequency switching;
duration for switching from the first communication apparatus to the second communication apparatus, wherein the first communication apparatus is configured to receive the first signal in the first frequency range; and
duration for starting the second communication apparatus, wherein the second communication apparatus is configured to receive the second signal in the second frequency range, wherein
the first frequency range is different from the second frequency range.

41. A communication apparatus, comprising:

a processing module, configured to determine N second GAP occasions based on M first GAP occasions, wherein the M first GAP occasions comprise the N second GAP occasions, the M first GAP occasions are periodic time domain positions that are of a first GAP and that are configured by the communication apparatus, M is greater than N, and both M and N are positive integers; and
a transceiver module, configured to stop, on the N second GAP occasions, sending a first signal to the first terminal device.

42. The apparatus according to claim 41, wherein the transceiver module is further configured to:
send configuration information to the first terminal device, wherein the configuration information is used to configure the periodic time domain positions of the first GAP.

43. The apparatus according to claim 42, wherein the configuration information comprises at least one of a periodicity, an offset value, and a time domain length of the first GAP.

44. The apparatus according to any one of claims 41 to 43, wherein the N second GAP occasions are determined from the M first GAP occasions based on an identifier of the first terminal device or an identifier of a terminal device group to which the first terminal device belongs.

45. The apparatus according to claim 44, wherein the M first GAP occasions are divided into W groups of GAP occasions, an $i^{th}$ first GAP occasion in the M first GAP occasions is the second GAP occasion, both i and W are positive integers, and i satisfies the following formula:

$$D \bmod W = i \bmod W,$$

wherein mod represents a modulo operation, and D is the identifier of the first terminal device or the identifier of the terminal device group to which the first terminal device belongs.

46. The apparatus according to claim 45, wherein W is determined based on a periodicity T of the first GAP and a measurement periodicity L, and the measurement periodicity is a periodicity in which the first terminal device measures a reference signal of a neighbor cell.

47. The apparatus according to claim 46, wherein W is less than or equal to a quotient of the periodicity T of the first GAP and the measurement periodicity L.

48. The apparatus according to claim 42 or 43, wherein the configuration information is carried in a broadcast message.

49. The apparatus according to claim 48, wherein the first terminal device is in an idle state or an inactive state when receiving the broadcast message.

50. The apparatus according to any one of claims 41 to 49, wherein the first signal comprises at least one of the following:

a low-power wake-up signal;
a low-power measurement signal; and
a low-power synchronization signal.

51. The apparatus according to any one of claims 41 to 50, wherein the transceiver module is specifically configured to:
stop sending the first signal to the first terminal device in a first frequency range.

52. The apparatus according to any one of claims 41 to 51, wherein

the time domain length of the first GAP is greater than or equal to duration for measuring a reference signal of a neighbor cell; or
the time domain length of the first GAP is greater than or equal to a sum of duration for measuring a reference signal of a neighbor cell and at least one of the following:

duration for measurement frequency switching;
duration for switching from a first communication apparatus to a second communication apparatus, wherein the first communication apparatus is configured to receive the first signal in the first frequency range; and
duration for starting the second communication apparatus, wherein the second communication apparatus is configured to receive the second signal in the second frequency range, wherein
the first frequency range is different from the second frequency range.

53. A communication device, comprising a processor and a memory, wherein the memory is configured to store a computer program, and the processor is configured to invoke and run the computer program stored in the memory, to perform the method according to any one of claims 1 to 26.

54. A chip, comprising a processor, configured to: invoke computer instructions from a memory and run the computer instructions, so that a device in which the chip is installed performs the method according to any one of claims 1 to 26.

55. A computer-readable storage medium, configured to store computer program instructions, wherein the computer program enables a computer to perform the method according to any one of claims 1 to 26.

56. A computer program product, comprising computer program instructions, wherein the computer program instructions enable a computer to perform the method according to any one of claims 1 to 26.

100

FIG. 1

Wake-up signal detected — Trigger — On state

WUR

No wake-up signal detected — Off state

Main circuit

FIG. 2

FIG. 3

200

S210: Send configuration information, where the configuration information is used to configure a periodic time domain position of a first GAP

S220: Determine N second GAP occasions based on M first GAP occasions, where the M first GAP occasions include the N second GAP occasions, the M first GAP occasions are periodic time domain positions that are of the first GAP and that are configured by the first network device, M is greater than N, and both M and N are positive integers

S230: Stop, on the N second GAP occasions, transmitting a first signal

FIG. 4

Periodicity of
a first GAP

Length of the
first GAP

## FIG. 5

GAP group 1  GAP group 2

GAP group 3  GAP group 4

Periodicity of
a first GAP

First GAP occasion

Length
of the
first GAP

Measurement
periodicity requirement

## FIG. 6

| Terminal device | First network device | Second network device |
|---|---|---|

S210: Send configuration information, where the configuration information is used to configure a periodic time domain position of a first GAP

S220: Determine N second GAP occasions based on M first GAP occasions, where the M first GAP occasions include the N second GAP occasions, the M first GAP occasions are periodic time domain positions that are of the first GAP and that are configured by a network device, M is greater than N, and both M and N are positive integers

S231: Stop, on the N second GAP occasions, transmitting a first signal in a first frequency range

S232: Transmit a second signal in a second frequency range on the N second GAP occasions, where the second signal is used for RRM measurement

FIG. 7

Communication apparatus 300

Processing module 310

Transceiver module 320

FIG. 8

Communication apparatus 400

Processor
420

Memory
430

Transceiver
410

FIG. 9

## INTERNATIONAL SEARCH REPORT

| International application No. |
| --- |
| **PCT/CN2023/119253** |

### A.  CLASSIFICATION OF SUBJECT MATTER

H04W72/04(2023.01)i;  H04W24/02(2009.01)i

According to International Patent Classification (IPC) or to both national classification and IPC

### B.  FIELDS SEARCHED

Minimum documentation searched (classification system followed by classification symbols)

IPC: H04W72/-,H04W24/-

Documentation searched other than minimum documentation to the extent that such documents are included in the fields searched

Electronic data base consulted during the international search (name of data base and, where practicable, search terms used)

CNABS, CNTXT, ENTXTC, VEN, CNKI, 3GPP: 测量, 多个, 间隔, 间隙, 选, 邻, 频率, gap, rrm, measurement, multiple, select, adjacent, frequency

### C.  DOCUMENTS CONSIDERED TO BE RELEVANT

| Category* | Citation of document, with indication, where appropriate, of the relevant passages | Relevant to claim No. |
| --- | --- | --- |
| X | CN 113507720 A (HUIZHOU TCL YUNCHUANG TECHNOLOGY CO., LTD.) 15 October 2021 (2021-10-15)<br>description, paragraphs 52-69 | 1-56 |
| A | CN 105474682 A (TELEFONAKTIEBOLAGET LM ERICSSON (PUBL)) 06 April 2016 (2016-04-06)<br>entire description | 1-56 |
| A | CN 109151922 A (HUAWEI TECHNOLOGIES CO., LTD.) 04 January 2019 (2019-01-04)<br>entire description | 1-56 |
| A | WO 2022007768 A1 (SPREADTRUM SEMICONDUCTOR NANJING CO., LTD.) 13 January 2022 (2022-01-13)<br>entire description | 1-56 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 November 2023** | **21 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119253**

| Patent document cited in search report | | | Publication date (day/month/year) | Patent family member(s) | | | Publication date (day/month/year) |
|---|---|---|---|---|---|---|---|
| CN | 113507720 | A | 15 October 2021 | None | | | |
| CN | 105474682 | A | 06 April 2016 | US | 2016192339 | A1 | 30 June 2016 |
| | | | | US | 11234234 | B2 | 25 January 2022 |
| | | | | EP | 3033899 | A1 | 22 June 2016 |
| | | | | EP | 3033899 | B1 | 03 August 2022 |
| | | | | RU | 2016108852 | A | 18 September 2017 |
| | | | | RU | 2631257 | C2 | 20 September 2017 |
| | | | | HK | 1216573 | A1 | 18 November 2016 |
| | | | | WO | 2015023222 | A1 | 19 February 2015 |
| CN | 109151922 | A | 04 January 2019 | EP | 3614737 | A1 | 26 February 2020 |
| | | | | EP | 3614737 | A4 | 22 April 2020 |
| | | | | EP | 3614737 | B1 | 23 February 2022 |
| | | | | US | 2020120527 | A1 | 16 April 2020 |
| | | | | US | 11606706 | B2 | 14 March 2023 |
| | | | | WO | 2018228270 | A1 | 20 December 2018 |
| | | | | CN | 109151922 | B | 14 May 2021 |
| WO | 2022007768 | A1 | 13 January 2022 | CN | 113923731 | A | 11 January 2022 |

Form PCT/ISA/210 (patent family annex) (July 2022)

**EP 4 583 605 A1**

**Patent documents cited in the description**

- CN 202211166569
- CN 202211340812